# EUROPEAN PATENT SPECIFICATION

(11) **EP 4 732 502 B1**
(45) Date of publication and mention of the grant of the patent: **12.08.2026**
(21) Application number: 24705621.1
(22) Date of filing: 13.02.2024
(51) Int. Cl.: H04L 9/40, H04L 61/4511, H04W 12/80

(54) **INTERCEPT INFORMATION HANDLING**
ABHÖRINFORMATIONSHANDHABUNG
GESTION D'INFORMATIONS D'INTERCEPTION

(43) Date of publication of application: 29.04.2026
(73) Proprietor: Telefonaktiebolaget LM Ericsson (publ), 164 83 Stockholm (SE)
(72) Inventor: FIORILLO, Lorenzo, 81020 San Nicola la Strada (CE) (IT); GARRUBA, Angelo, Frisco, Texas 75035 (US)
(74) Representative: Ericsson
(86) International application number: PCT/EP2024/053652
(87) International publication number: WO 2025/171863

(56) References cited:
- EUROPEAN TELECOMMUNICATIONS STANDARDS INSTITUTE (ETSI): "Lawful Interception (LI); Study on high bandwidth delivery", 30 July 2020 (2020-07-30), XP014378924, Retrieved from the Internet <URL:http://www.etsi.org/deliver/etsi_tr/103600_103699/103656/01.01.01_60/tr_103656v010101p.pdf> [retrieved on 20200730]
- OFCOM (CH) ET AL: "Truncation methods for very high bandwidth interceptions", vol. TC LI Lawful Interception, 18 October 2023 (2023-10-18), XP014474412, Retrieved from the Internet <URL:ftp://docbox.etsi.org/LI/LI/05-CONTRIBUTIONS/2023/LI(23)P64025_Truncation_methods_for_very_high_bandwidth_interceptions.docx> [retrieved on 20231018]
- 3RD GENERATION PARTNERSHIP PROJECT (3GPP): "3rd Generation Partnership Project; Technical Specification Group Services and System Aspects; 3G security; Handover interface for Lawful Interception (LI) (Release 17)", 15 September 2023 (2023-09-15), XP052517723, Retrieved from the Internet <URL:https://ftp.3gpp.org/tsg_sa/WG3_Security/TSGS3_LI/Specs-for-Review/draft-33108-h20.docx> [retrieved on 20230915]

## Description

### TECHNICAL FIELD

The present disclosure relates to methods for handling information associated with lawful interception, and a mediation and delivery function (MDF) device, a law enforcement monitoring facility (LEMF) device, a system, andcomputer programs configured to operate in accordance with those methods.

### BACKGROUND

Lawful interception (LI) is a security process in which a service provider or a network operator collects and provides law enforcement officials with intercepted communications of private individuals or organisations. In more detail, laws of individual nations and regional institutions (e.g. European Union), and sometimes licensing and operating conditions, define a need to intercept communications traffic and related information in modern communications systems (see, for example, third generation partnership project (3GPP) technical specification (TS) 33.108 V17.2.0).

According to third generation partnership project (3GPP), European telecommunications standards institute (ETSI), American national standards institute (ANSI) LI standards, an interception order can require the interception of a payload related to a target. The interception order is requested by a law enforcement agency (LEA). The interception order requires the payload to be intercepted, and the intercepted payload to be provided to the LEA such that the LEA can receive the payload related to the target.

In existing techniques for performing LI, an LEA has two main options for how an intercepted payload of a target is received by the LEA. Specifically, in a first option, the LEA may receive all packets of the intercepted payload. In a second option, the LEA may receive only the packet header of the intercepted payload. However, these existing techniques rely on the transfer of large amounts of data, much of which may not be very useful for the LEA. In particular, in certain scenarios, such as in the case of packet data interception of internet services, the existing techniques for handling intercept related information (IRI) are not efficient.

In more detail, although the first option of the LEA receiving all packets of the intercepted payload is widely used, this option has a drawback in that the amount of information (e.g. data) provided to the LEA is huge. When the first option is used in conjunction with internet service interception, the above-mentioned drawback is compounded. Indeed, since information related to internet services is commonly encrypted, the usability of the extensive information provided to the LEA is extremely limited.

Furthermore, although the use of the second option mentioned above tends to result in a lesser amount of information being provide to the LEA, this second option is still inefficient. This is because the amount of IRI provided to the LEA is also huge (e.g. one unit of IRI per intercepted packet), whereas the amount of information that the LEA is able to extract from the information provided is minimal.

The document ETSI TR 103 656 V1.1.1 discloses a study on high bandwidth delivery in relation to LI. Clause 5.1.3 discloses that a Mediation and Delivery Function (MDF) may face an internal higher bandwidth issue than one related to delivery to a Law Enforcement Monitoring Facility (LEMF).

The ETSI document LI(23)P64025, "Truncation methods for very high bandwidth interceptions", discloses different potential truncation methods that could help the LEA and CSP/MF vendors to cope with increasing bandwidth capabilities and necessary storage capacity.

### SUMMARY

As mentioned above, there are certain disadvantages associated with existing techniques for performing LI in that the existing techniques are inefficient. Specifically, existing techniques do not make efficient use of network resources when providing an LEA with IRI. In particular, it is an object of the disclosure to enable the performance of LI in a network while enabling efficient use of network resources. It is another object of the disclosure to limit the computational cost (e.g. to an LEA) involved in performing LI in a network.

Therefore, according to an aspect of the disclosure, there is provided a first method for handling information associated with lawful interception (LI) in a network. The first method is performed by a mediation and delivery function (MDF) device of the network.

The first method comprises obtaining, from a point of interception (POI), first information indicative of one or more domain name system (DNS) server queries. The one or more DNS server queries are associated with an LI target. The obtaining of the first information comprises: receiving the one or more DNS server queries; and retrieving the first information from the one or more server DNS queries. The first method also comprises initiating transmission, over a handover interface, of an intercept related information (IRI) message towards a law enforcement monitoring facility (LEMF) device of the network. The IRI message comprises the first information.

In some examples, initiating transmission of the IRI message may comprise initiating transmission of the IRI message if a first threshold number of the one or more DNS server queries is intercepted at the POI. Alternatively, or in addition initiating transmission of the IRI message may comprise initiating transmission of the IRI message periodically.

In some examples, initiating transmission of the IRI message may comprise initiating transmission of the IRI message if one or more of a first criterion and a second criterion is met. The first criterion may be met if a second threshold number of the one or more DNS server queries is intercepted at the interception point. The second criterion may be met if a first period of time elapses.

In some examples, the MDF device may comprise a first MDF entity and a second MDF entity. In these examples, the obtaining of the first information may be performed by the first MDF entity. Alternatively, or in addition, the initiating of the transmission of the IRI message may be performed by the second MDF entity.

According to another aspect of the disclosure, there is provided a second method for handling information associated with LI in a network. The second method is performed by an LEMF device of the network. The second method comprises receiving, over a handover interface, an IRI message from an MDF device of the network. The IRI message comprises first information indicative of one or more DNS server queries. The one or more DNS server queries are associated with an LI target. The first information was retrieved, by the MDF device from the one or more DNS server queries.

In some examples, the IRI message may comprise the first information only. In some examples, the first information may comprise uniform resource locator (URL) information. In some examples, the IRI message may be an IRI report message. In some examples, the handover interface may comprise a handover interface port 2 (HI2). According to another aspect of the disclosure, there is provided a MDF device comprising processing circuitry configured to operate in accordance with the first method described earlier.

According to another aspect of the disclosure, there is provided a LEMF device comprising processing circuitry configured to operate in accordance with the second method described earlier.

According to another aspect of the disclosure, there is provided a system. The system comprises at least one MDF device, as described earlier, and at least one LEMF device, as described earlier.

According to another aspect of the disclosure, there is provided a computer program comprising instructions which, when executed by processing circuitry, cause the processing circuitry to perform the first method described earlier and/or the second method described earlier.

Thus, in the manner described above, improved techniques for handling information associated with LI are provided. Advantageously, a law enforcement agency (LEA) can be provided with relevant information about a target's activity by way of only a small amount of IRI being provided to the LEA. In this way, the LEA is provided with a new option (e.g. at warrant provisioning) for being provided with IRI over a handover interface (e.g. handover interface 2 (HI2)). As such, the LEA is able to build a profile of the target based on information indicative of DNS queries associated with the target. Thus, the techniques described herein improve the efficiency of resource usage in a network when performing LI while still providing the LEA with useful information.

### BRIEF DESCRIPTION OF THE DRAWINGS

For a better understanding of the techniques, and to show how they may be put into effect, reference will now be made, by way of example, to the accompanying drawings, in which:
Figures 1 and 2 are schematic illustrations of existing techniques for performing LI;
Figure 3 is a block diagram illustrating a management and delivery function (MDF) device according to an embodiment;
Figure 4 is a block diagram illustrating a method performed by the MDF device according to an embodiment;
Figure 5 is a block diagram illustrating a law enforcement monitoring facility (LEMF) device according to an embodiment;
Figure 6 is a block diagram illustrating a method performed by the LEMF device according to an embodiment;
Figures 7 and 8 are block diagrams illustrating a method performed by the MDF device according to some embodiments;
Figure 9 is a block diagram illustrating a method performed by the LEMF device according to an embodiment;
Figure 10 is a schematic illustration of a system according to an embodiment; and
Figure 11 is a block diagram illustrating a computer program product according to an embodiment.

### DETAILED DESCRIPTION

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

In some instances, detailed descriptions of well-known methods, entities, interfaces, circuits, and devices are omitted so as not obscure the description with unnecessary detail. Those skilled in the art will appreciate that the functions described may be implemented in one or more entities using hardware circuitry (e.g., analogue and/or discrete logic gates interconnected to perform a specialized function, ASICs, PLAs, etc.) and/or using software programs and data in conjunction with one or more digital microprocessors or general purpose computers. Entities that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

As described earlier, there are described herein improved techniques for handling information associated with lawful interception (LI) in a network. The network referred to herein can be any type of network. For example, the network referred to herein may be a communications or telecommunications network. In some embodiments, the network referred to herein can be a mobile network, such as a fifth generation (5G) mobile network or any other generation mobile network (e.g. 6G). In some embodiments, the network referred to herein can be a core network (e.g. a 5G core (5GC) network) or a radio access network (RAN). In some embodiments, the network referred to herein can be a virtual network or an at least partially virtual network. Although some examples have been provided for the type of network referred to herein, it will be understood that the network referred to herein can be any other type of network.

In order to aid with understanding the techniques described herein and the associated technical advantages, an example of some existing techniques will first be described.

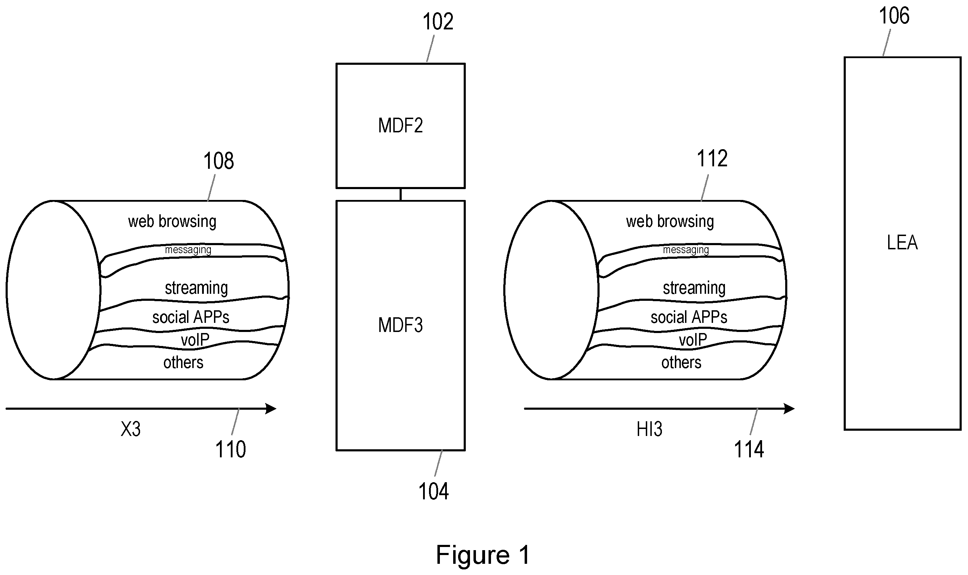

**Figure** 1 illustrates an example technique for performing LI in a network. The example technique illustrated in Figure 1 can be referred to as "full HI3 delivery". As illustrated in Figure 1, the network comprises a first mediation and delivery function (MDF) 102 ("MDF2"), a second MDF 104 ("MDF3"), and a LEA 106. The first MDF 102 and the second MDF 104 are configured to perform steps related to the interception of information related to a target for the LEA 106. The interception of information (e.g. of the type illustrated by the example of Figure 1) can be referred to herein as content of communication (CC) interception. Herein, the term "payload" can be defined as the intercepted payload (e.g. all traffic and/or data) associated with the target. The example technique illustrated in Figure 1 is an example of an entire payload being delivered to the LEA 106.

In particular, as illustrated by arrow 110 of Figure 1, the payload is intercepted and received by the second MDF 104. As also illustrated by arrow 110 of Figure 1, the intercepted payload may be received by the second MDF 104 over an X3 interface. As illustrated by block 108 of Figure 1, the intercepted payload comprises information associated with the target such as web browsing information, messaging information, streaming information, social application (App) information, and/or voice over internet protocol (VoIP) information, etc.

As illustrated by arrow 114 of Figure 1, the entire intercepted payload is transmitted to the LEA 106. As such, the LEA 106 receives the intercepted payload from the second MDF 104. As also illustrated by arrow 114 of Figure 1, the LEA 106 receives the payload over an HI3 interface. As illustrated by block 112 of Figure 1, in the example technique illustrated in Figure 1 the amount of intercepted information received by the LEA 106 is equal to the amount of information intercepted and received by the second MDF 104. As such, all the packets of the intercepted payload are received by the LEA 106. Therefore, the amount of information (e.g. traffic) received by the LEA 106 is relatively large. This drawback is especially disadvantageous when the example technique is applied to interception of traffic related to internet services, in which the traffic is often encrypted.

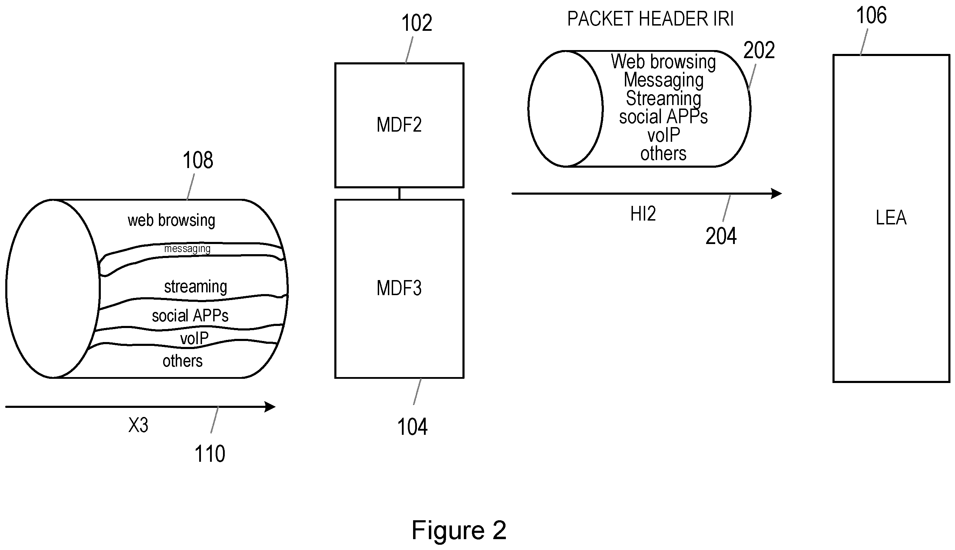

**Figure** 2 illustrates another example technique for performing LI in a network. The technique illustrated in Figure 2 can be referred to as "packet data header interception". The network illustrated in Figure 2 is as described with reference to Figure 1 above. In particular, blocks 102 to 108 of Figure 2 can be as described with reference to blocks 102 to 108 of Figure 1. Moreover, the method step corresponding to arrow 110 of Figure 2 can be as described with reference to the method step of arrow 110 of Figure 1.

In contrast to the example technique described above with reference to Figure 1, and as illustrated by block 202 of Figure 2, the example technique illustrated by Figure 2 involves the LEA 106 receiving only the packet header(s) information associated with the intercepted payload. As illustrated by arrow 204 of Figure 2, packet header IRI is transmitted to the LEA 106 by the first MDF 102. As such, the LEA 106 receives the packet header IRI from the first MDF 102. As illustrated by arrow 204 of Figure 2, the packet header IRI may be received by the LEA 106 over an HI2 interface.

The packet header IRI is determined using the payload information described with reference to block 108 of Figure 2. As such, the packet header IRI can comprise packet header information associated with the target such as web browsing information, messaging information, streaming information, social application (App) information, and/or voice over internet protocol (VoIP) information, etc. In comparison to the example technique illustrated in Figure 1, the example technique described with reference to Figure 2 involves the LEA 106 receiving a lesser amount of information. However, even though the amount of information received by the LEA 106 is less, the example technique is still not efficient. In particular, when applied to interception of traffic related to internet services, the amount of IRI received by the LEA 106 can still be huge and the amount of useful information that the LEA 106 is actually able to extrapolate from said IRI is minimal.

Thus, the example techniques as described with reference to Figures 1 and 2 highlight the inefficiencies associated with existing techniques for handling lawful interception of information. However, the improved techniques described herein address the challenges associated with the existing techniques such as those illustrated in Figures 1 and 2. Specifically, the techniques described herein enable an LEA to be provided with relevant information (i.e. associated with a target) by means of a relatively small IRI delivery size.

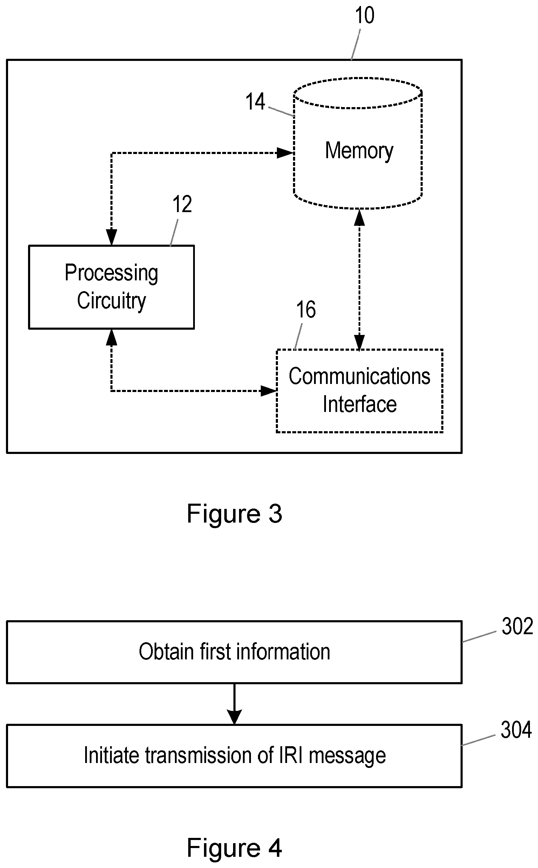

**Figure 3** illustrates an MDF device 10 of a network in accordance with an embodiment. The MDF device 10 is for handling information associated with LI in the network. In some embodiments, the MDF device 10 referred to herein can refer to equipment capable, configured, arranged and/or operable to communicate directly or indirectly with the LEMF device referred to herein, and/or with other nodes or equipment to enable and/or to perform the functionality described herein. In some embodiments, the MDF device 10 referred to herein can, for example, be a physical node (e.g. a physical machine or server). In some embodiments, the MDF device 10 may, for example, be a host which comprises a virtual node (e.g. a virtual machine, VM) configured to perform the functionality of the MDF device 10. Thus, in some embodiments, the MDF device 10 can be referred to as an MDF node. In some embodiments, the MDF device 10 can comprise a first MDF entity (e.g. node) and second MDF entity (e.g. node), as described herein.

As illustrated in Figure 3, the MDF device 10 comprises processing circuitry (or logic) 12. The processing circuitry 12 controls the operation of the MDF device 10 and can implement the method described herein in respect of the MDF device 10. The processing circuitry 12 can be configured or programmed to control the MDF device 10 in the manner described herein. The processing circuitry 12 can comprise one or more hardware components, such as one or more processors, one or more processing units, one or more multi-core processors and/or one or more modules. In particular implementations, each of the one or more hardware components can be configured to cause the MDF device 10 to perform, or is for performing, individual or multiple steps of the method described herein in respect of the MDF device 10. In some embodiments, the processing circuitry 12 can be configured to run software to perform the method described herein in respect of the MDF device 10. The software may be containerised according to some embodiments. Thus, in some embodiments, the processing circuitry 12 may be configured to run a container to cause the MDF device 10 to perform the method described herein in respect of the MDF device 10.

Briefly, the processing circuitry 12 of the MDF device 10 is configured to obtain, from a point of interception (POI), first information indicative of one or more domain name system (DNS) server queries. The one or more DNS server queries are associated with an LI target. The processing circuitry 12 of the MDF device 10 is also configured to initiating transmission, over a handover interface, of an intercept related information (IRI) message towards a law enforcement monitoring facility (LEMF) device of the network. The IRI message comprises the first information.

As illustrated in Figure 3, in some embodiments, the MDF device 10 may optionally comprise a memory 14. The memory 14 of the MDF device 10 can comprise a volatile memory or a non-volatile memory. In some embodiments, the memory 14 of the MDF device 10 may comprise a non-transitory media. Examples of the memory 14 of the MDF device 10 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 12 of the MDF device 10 can be communicatively coupled (e.g. connected) to the memory 14 of the MDF device 10. In some embodiments, the memory 14 of the MDF device 10 may be for storing program code or instructions which, when executed by the processing circuitry 12 of the MDF device 10, cause the MDF device 10 to operate in the manner described herein in respect of the MDF device 10. For example, in some embodiments, the memory 14 of the MDF device 10 may be configured to store program code or instructions that can be executed by the processing circuitry 12 of the MDF device 10 to cause the MDF device 10 to operate in accordance with the method described herein in respect of the MDF device 10. Alternatively or in addition, the memory 14 of the MDF device 10 can be configured to store any information, data, messages, requests, responses, indications, notifications, signals, or similar, that are described herein. The processing circuitry 12 of the MDF device 10 may be configured to control the memory 14 of the MDF device 10 to store any of the information, data, messages, requests, responses, indications, notifications, signals, or similar, that are described herein.

In some embodiments, as illustrated in Figure 3, the MDF device 10 may optionally comprise a communications interface 16. The communications interface 16 of the MDF device 10 can be communicatively coupled (e.g. connected) to the processing circuitry 12 of the MDF device 10 and/or the memory 14 of the MDF device 10. The communications interface 16 of the MDF device 10 may be operable to allow the processing circuitry 12 of the MDF device 10 to communicate with the memory 14 of the MDF device 10 and/or vice versa. Similarly, the communications interface 16 of the MDF device 10 may be operable to allow the processing circuitry 12 of the MDF device 10 to communicate with any one or more entities (e.g. the LEMF device referred to herein) referred to herein and/or any other entity. The communications interface 16 of the MDF device 10 can be configured to transmit and/or receive any of the information, data, messages, requests, responses, indications, notifications, signals, or similar, that are described herein. In some embodiments, the processing circuitry 12 of the MDF device 10 may be configured to control the communications interface 16 of the MDF device 10 to transmit and/or receive any of the information, data, messages, requests, responses, indications, notifications, signals, or similar, that are described herein.

Although the MDF device 10 is illustrated in Figure 3 as comprising a single memory 14, it will be appreciated that the MDF device 10 may comprise at least one memory (i.e. a single memory or a plurality of memories) 14 that operate in the manner described herein. Similarly, although the MDF device 10 is illustrated in Figure 3 as comprising a single communications interface 16, it will be appreciated that the MDF device 10 may comprise at least one communications interface (i.e. a single communications interface or a plurality of communications interfaces) 16 that operate in the manner described herein. It will also be appreciated that Figure 3 only shows the components required to illustrate an embodiment of the MDF device 10 and, in practical implementations, the MDF device 10 may comprise additional or alternative components to those shown.

**Figure 4** illustrates a method performed by the MDF device 10 of a network in accordance with an embodiment. The method is for handling information associated with LI in the network. The MDF device 10 described earlier with reference to Figure 3 can be configured to operate in accordance with the method of Figure 4. The method can be performed under the control of processing circuitry 12 of the MDF device 10 according to some embodiments.

With reference to Figure 4, as illustrated at block 302, first information indicative of one or more domain name system (DNS) queries is obtained from a point of interception (POI). More specifically, the MDF device 10 (e.g. the processing circuitry 12 of the MDF device 10) obtains the first information. The one or more DNS server queries are associated with an LI target. The LI target may be referred to herein as the target. The target can be a target that is selected by a law enforcement agency (LEA). The LEA may select the target using a warrant (e.g. via warrant provisioning). A warrant can be defined herein as a formal mechanism to require LI from the LEA on the target. A warrant can be referred as an intercept request, an intercept order, a lawful order, a court order, a lawful order, and/or a judicial order. The target may be associated with a private individual and/or an organisation. The target can be a user (e.g. subscriber) of the network. For example, the target may correspond to a physical entity (e.g. a wireless device) comprised in the network.

The POI referred to herein can be configured to detect communication from the target. The POI may derive, as output, intercept related information (IRI) (e.g. the first information referred to herein) and/or communications content from the target communications. The POI can deliver the output to the MDF device 10. In some examples, the MDF may receive information (e.g. the first information referred to herein) from any number (e.g. one or more) of POIs. This may be the case if, for example, multiple POIs are involved in the execution of a warrant. The POI may be associated with a network function (NF) of the network. For example, the POI may be embedded within an NF or separate from an NF with which the POI is associated.

A DNS server query, as referred to herein, can be define as a query (e.g. message) that is transmitted by a user (e.g. the target) to a DNS server. The one or more DNS server queries referred to herein can comprise any type of DNS server query. The Internet utilises a DNS system which can be invoked any time an (e.g. end) user types a domain name into a web browser or uses a mobile application (app) for certain services. In all such cases, (e.g. implicit) queries are transmitted (e.g. done) to a DNS server in order to have a uniform resource locator (URL) (e.g. associated with a domain name and/or an app) translated into an internet protocol (IP) address. As such, the one or more DNS queries associated with the target can comprise a DNS query made (e.g. transmitted) by the target towards a DNS server. The DNS server referred to herein may be a port 53 DNS server.

As illustrated by block 304 of Figure 4, transmission of an IRI message, over a handover interface, is initiated towards a LEMF device. More specifically, the MDF device 10 (e.g. the processing circuitry 12 of the MDF device 10) initiates the transmission of the IRI message towards the LEMF device (e.g. via the communications interface 16 of the MDF device 10). Herein, the term "initiate" can mean, for example, cause or establish. Thus, the MDF device 10 (e.g. the processing circuitry 12 of the MDF device 10) can be configured to itself transmit the IRI message (e.g. via the communications interface 16 of the MDF device 10) or can be configured to cause another entity to transmit the IRI message. The IRI message comprises the first information referred to herein. The first information can be referred to herein as an interception product. Thus, the MDF device 10 can deliver an interception product to the LEMF device.

In some examples, the IRI message comprises the first information only. In other words, in some examples, the first information is the only information comprised in the IRI message. In some examples, the first information comprises URL information. The URL information can comprise one or more URLs visited by the target. The URL information can correspond to the one or more DNS server queries associated with the target. As such, the one or more URLs visited by the target can be determined using the one or more DNS server queries. In some examples, the first information may comprise the URL information only. As such, in these examples, the IRI message may comprise the URL information only (e.g. and no other information). In this way, the LEMF device can be provided (e.g. by the MDF device 10) with a list of URLs visited by the target.

In some examples, the MDF device 10 may comprise a (e.g. physical) first MDF entity and a (e.g. physical) second MDF entity. The first MDF entity may be configured to operate as a delivery function 3 (DF3) and/or a mediation and delivery function 3 (MDF3) as defined by 3GPP (see, for example, 3GPP TS 33.108). The second MDF entity may be configured to operate as a delivery function 2 (DF2) and/or a mediation and delivery function 2 (MDF2) as defined by 3GPP (see, for example, 3GPP TS 33.108). In these examples, the step of obtaining the first information, as referred to herein, may be performed by the first MDF entity. The (e.g. software module comprised in the) first MDF entity may be able to detect each (e.g. all) of the one or more DNS server queries and retrieve the one or more URLS visited by the target based on the (e.g. corresponding) one or more DNS server queries. In some examples, the step of initiating transmission of the IRI message, as referred to herein, may be performed by the second MDF entity (502). Thus, in some examples, the first MDF entity may obtain (e.g. extrapolate) the first information (e.g. the one or more URLs visited by the target), and make the first information available to the second MDF entity for delivery to the LEMF device over the handover interface.

The handover interface may comprise, for example, a handover interface port 2 (HI2). HI2 is an interface defined by 3GPP (see, for example, 3GPP TS 33.108).

As mentioned herein, the one or more DNS server queries may comprise a plurality of (e.g. multiple) DNS server queries associated with the target. As such, in some examples, there can be a plurality of URLs visited by the target corresponding to the plurality of DNS server queries. For example, opening a (e.g. mobile) app, and/or visiting a website, can trigger multiple queries towards the DNS. It is therefore useful to be able to aggregate information associated with multiple DNS server queries associated with the target, and/or multiple URLs visited by the target. The first information comprised in the IRI message can thus be indicative of a plurality of DNS server queries associated with the target. For example, the first information comprised in the IRI message may comprise URL information corresponding to a plurality of URLs visited by the target.

In some examples, the IRI message can be an IRI report message. The IRI report message may be characterised (e.g. specified) by an associated EVENT TYPE. As described above, the IRI message referred to herein comprises first information indicative of one or more DNS server queries. As such, in some examples, a new EVENT TYPE for the IRI report message may be defined as "dnsQueriesReport". The IRI report message can comprise a (new) field (e.g. a "dns Queries Report" field) which can comprise the first information. As such, in some examples, the (new) field can comprise information (e.g. extracts) indicative of actual DNS server queries (e.g. URL information as defined herein). An example of parameters that may be associated with the IRI report message is given in Table 1 below. Note that Table 1 below provides an example of the "dns Queries Report" field.

**Table 1**

| **Parameter** | **MOC** | **Description/Conditions** |
|---|---|---|
| observed MSISDN | C | Provide at least one and others when available. |
| observed IMSI | | |
| observed IMEI | | |
| observed PDP address | C | If available, shall be provided in the following cases to identify the: |
| | | - static address requested by the target's MS, and allocated by the Network for a successful PDP context activation. |
| | | - address allocated dynamically by the network to the target MS in association with a PDP context activation (i.e. address is sent by the Network in an Activate PDP Context Accept) for a successful PDP context activation procedure when the PDP Context activation request does not contain a static PDP address. |
| | | - address offered by the network in association with a network-initiated PDP context activation request when the target's MS accepts the network-initiated PDP context activation request. |
| event type | M | Shall provide the **dnsQueriesReport** event type. |
| event date | M | Shall provide the date and time the event is detected. |
| event time | | |
| access point name | C | If available, shall be provided to identify the packet data network to which the target is connected. |
| PDP type | C | When a PDP address is provided, shall provide the PDP type of the observed PDP address. The PDP Type defines the end user protocol to be used between the external packet data network and the MS. |
| network identifier | M | Shall be provided. |
| correlation number | M | Shall provide to uniquely identify the PDP context delivered to the LEMF used to correlate IRI records with CC. |
| lawful intercept identifier | M | Shall be provided. |
| dns Queries Report | M | Shall provide the **dnsQueriesReport** as per structure below |
| NSAPI | O | Provided for additional information. |

A new evolved packet system event (EPSEvent) can be used for IRI messages comprising the first information, as described herein, as illustrated below. As shown below, the new EPSEvent can include a new enumerated "dnsQueriesReport". It will be understood that the use of the number "56" below is merely an example, and that any suitable number may be used in practice.

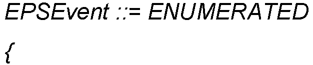

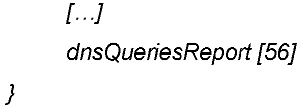

A new structure "dnsQueriesReport" can be introduced in IRI-Parameters as follows:

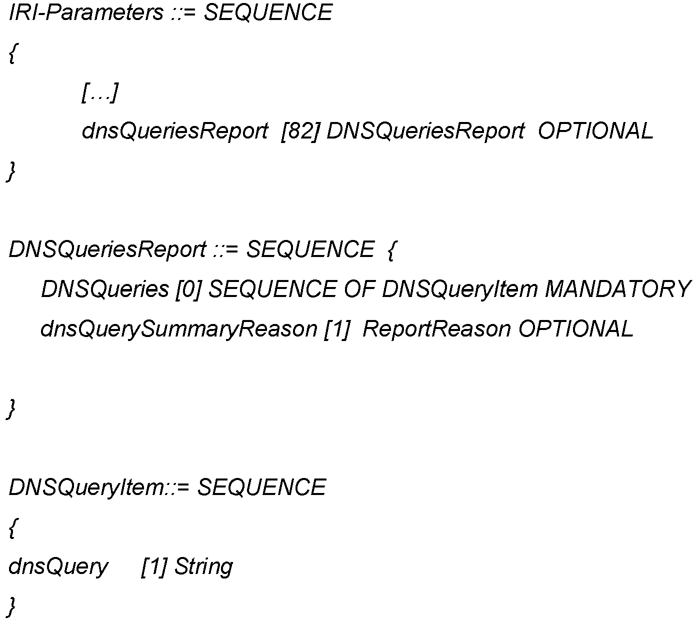

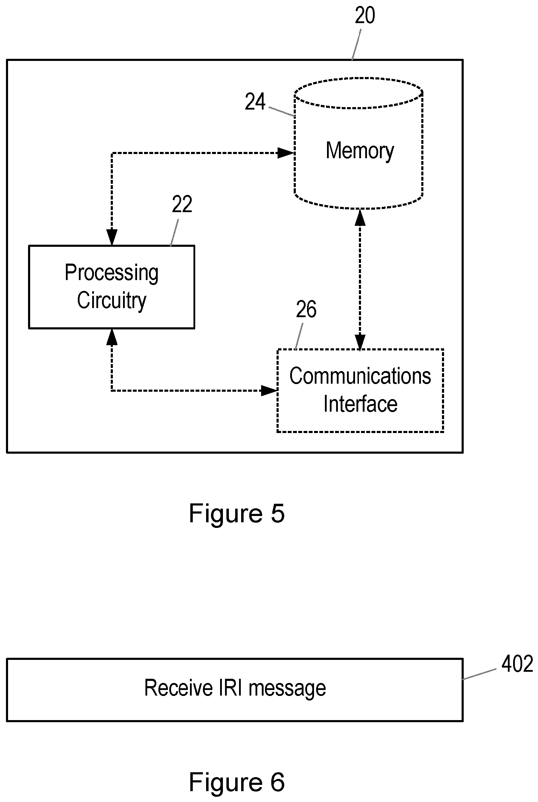

**Figure** 5 illustrates a LEMF device 20 of a network in accordance with an embodiment. The LEMF device 20 is for handling information associated with LI in the network. In some embodiments, the LEMF device 20 referred to herein can refer to equipment capable, configured, arranged and/or operable to communicate directly or indirectly with the MDF device 10 referred to herein, and/or with other nodes or equipment to enable and/or to perform the functionality described herein. In some embodiments, the LEMF device 20 referred to herein can, for example, be a physical node (e.g. a physical machine or server). In some embodiments, the LEMF device 20 may, for example, be a host which comprises a virtual node (e.g. a virtual machine, VM) configured to perform the functionality of the LEMF device 20. Thus, in some embodiments, the LEMF device 20 can be referred to as a LEMF node. The LEMF device 20 can be associated with an LEA as referred to herein.

As illustrated in Figure 5, the LEMF device 20 comprises processing circuitry (or logic) 22. The processing circuitry 22 controls the operation of the LEMF device 20 and can implement the method described herein in respect of the LEMF device 20. The processing circuitry 22 can be configured or programmed to control the LEMF device 20 in the manner described herein. The processing circuitry 22 can comprise one or more hardware components, such as one or more processors, one or more processing units, one or more multi-core processors and/or one or more modules. In particular implementations, each of the one or more hardware components can be configured to cause the LEMF device 20 to perform, or is for performing, individual or multiple steps of the method described herein in respect of the LEMF device 20. In some embodiments, the processing circuitry 22 can be configured to run software to perform the method described herein in respect of the LEMF device 20. The software may be containerised according to some embodiments. Thus, in some embodiments, the processing circuitry 22 may be configured to run a container to cause the LEMF device 20 to perform the method described herein in respect of the LEMF device 20.

Briefly, the processing circuitry 22 of the LEMF device 20 is configured to receive, over a handover interface, an IRI message from an MDF device of the network. The IRI message comprises first information indicative of one or more DNS server queries. The one or more DNS server queries are associated with an LI target.

As illustrated in Figure 5, in some embodiments, the LEMF device 20 may optionally comprise a memory 24. The memory 24 of the LEMF device 20 can comprise a volatile memory or a non-volatile memory. In some embodiments, the memory 24 of the LEMF device 20 may comprise a non-transitory media. Examples of the memory 24 of the LEMF device 20 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 22 of the LEMF device 20 can be communicatively coupled (e.g. connected) to the memory 24 of the LEMF device 20. In some embodiments, the memory 24 of the LEMF device 20 may be for storing program code or instructions which, when executed by the processing circuitry 22 of the LEMF device 20, cause the LEMF device 20 to operate in the manner described herein in respect of the LEMF device 20. For example, in some embodiments, the memory 24 of the LEMF device 20 may be configured to store program code or instructions that can be executed by the processing circuitry 22 of the LEMF device 20 to cause the LEMF device 20 to operate in accordance with the method described herein in respect of the LEMF device 20. Alternatively or in addition, the memory 24 of the LEMF device 20 can be configured to store any information, data, messages, requests, responses, indications, notifications, signals, or similar, that are described herein. The processing circuitry 22 of the LEMF device 20 may be configured to control the memory 24 of the LEMF device 20 to store any of the information, data, messages, requests, responses, indications, notifications, signals, or similar, that are described herein.

In some embodiments, as illustrated in Figure 5, the LEMF device 20 may optionally comprise a communications interface 26. The communications interface 26 of the LEMF device 20 can be communicatively coupled (e.g. connected) to the processing circuitry 22 of the LEMF device 20 and/or the memory 24 of the LEMF device 20. The communications interface 26 of the LEMF device 20 may be operable to allow the processing circuitry 22 of the LEMF device 20 to communicate with the memory 24 of the LEMF device 20 and/or vice versa. Similarly, the communications interface 26 of the LEMF device 20 may be operable to allow the processing circuitry 22 of the LEMF device 20 to communicate with any one or more entities (e.g. the MDF device 10 referred to herein) referred to herein and/or any other entity. The communications interface 26 of the LEMF device 20 can be configured to transmit and/or receive any of the information, data, messages, requests, responses, indications, notifications, signals, or similar, that are described herein. In some embodiments, the processing circuitry 22 of the LEMF device 20 may be configured to control the communications interface 26 of the LEMF device 20 to transmit and/or receive any of the information, data, messages, requests, responses, indications, notifications, signals, or similar, that are described herein.

Although the LEMF device 20 is illustrated in Figure 5 as comprising a single memory 24, it will be appreciated that the LEMF device 20 may comprise at least one memory (i.e. a single memory or a plurality of memories) 24 that operate in the manner described herein. Similarly, although the LEMF device 20 is illustrated in Figure 5 as comprising a single communications interface 26, it will be appreciated that the LEMF device 20 may comprise at least one communications interface (i.e. a single communications interface or a plurality of communications interfaces) 26 that operate in the manner described herein. It will also be appreciated that Figure 5 only shows the components required to illustrate an embodiment of the LEMF device 20 and, in practical implementations, the LEMF device 20 may comprise additional or alternative components to those shown.

**Figure** 6 illustrates a method performed by the LEMF device 20 of a network in accordance with an embodiment. The method is for handling information associated with LI in the network. The LEMF device 20 described earlier with reference to Figure 5 can be configured to operate in accordance with the method of Figure 6. The method can be performed under the control of processing circuitry 22 of the LEMF device 20 according to some embodiments.

With reference to Figure 6, as illustrated by block 402, an IRI message is received, over a handover interface, from an MDF device 10 of the network. The IRI message comprises first information indicative of one or more DNS server queries. The one or more DNS server queries are associated with an LI target. The IRI message, the handover interface, the MDF device 10, the first information, the one or more DNS server queries, and/or the target can be as described herein.

As described herein, the IRI message referred to herein comprises first information indicative of one or more DNS server queries. The interception of DNS server queries is useful in the context of LI for many reasons. Specifically, by default, DNS traffic (e.g. DNS server queries) is not encrypted. While there are protocols to encrypt DNS traffic, such as DSN over transport layer security (TLS) (DoT), and DNS over hypertext transfer protocol secure (HTTPS) (DoH), most internet service providers (ISPs) disable such encryption options for several reasons. These reasons include ISPs relying on the DNS for parental controls, safe search and malware control. Another reason for ISPs to disable encryption options is that ISPs can be required (e.g. by governments) to restrict access to illegal sites. The use of encrypted DNS traffic would prevent the ISP from fulfilling the requirements described above. Recent statistics suggest that although DNS query encryption is technically possible, in most countries the encryption is very limited (e.g. 12% of the total internet traffic in US and Europe). This trend of relatively low rate of DNS query encryption has been stable over the last 5 years, with no significant increase. With regards to privacy, there are considerably fewer DoT and DoH resolvers compared to DNS resolvers, giving to these few resolvers a view of a (e.g. global) user's activity. Therefore, for the reasons mentioned above, DNS queries are generally not encrypted and are thus available to the MDF device 10 (e.g. the first MDF entity referred to herein).

Below are some example samples of typical internet sessions, obtained using Wireshark. The below examples exemplify the manner in which first information (e.g. URL information), which is shown in bold, can be extracted from a DNS query.

### Example 1: Starting a web browser (i.e. Chrome)

User Datagram Protocol, Src Port: 53893, Dst Port: 53
   Source Port: 53893
   Destination Port: 53
   Length: 40
   Checksum: 0xa74b [unverified]
   [Checksum Status: Unverified]
   [Stream index: 3]
   [Timestamps]
   UDP payload (32 bytes)
Domain Name System (query)
   Transaction ID: 0xa3f5
   Flags: 0x0100 Standard query
   Questions: 1
   Answer RRs: 0
   Authority RRs: 0
   Additional RRs: 0
   Queries
      **www.google.com:** type AAAA, class IN

### Example 2: Browsing to a website

User Datagram Protocol, Src Port: 49382, Dst Port: 53
   Source Port: 49382
   Destination Port: 53
   Length: 50
   Checksum: 0xa755 [unverified]
   [Checksum Status: Unverified]
   [Stream index: 39]
   [Timestamps]
   UDP payload (42 bytes)
Domain Name System (query)
   Transaction ID: 0x4707
   Flags: 0x0100 Standard query
   Questions: 1
   Answer RRs: 0
   Authority RRs: 0
   Additional RRs: 0
   Queries
      **www.ilfattoquotidiano.it:** type AAAA, class IN

### Example 3: Starting a WhatsApp session

User Datagram Protocol, Src Port: 53392, Dst Port: 53
   Source Port: 53392
   Destination Port: 53
   Length: 42
   Checksum: 0xa74d [unverified]
   [Checksum Status: Unverified]
   [Stream index: 32]
   [Timestamps]
   UDP payload (34 bytes)
Domain Name System (query)
   Transaction ID: 0x2ff7
   Flags: 0x0100 Standard query
   Questions: 1
   Answer RRs: 0
   Authority RRs: 0
   Additional RRs: 0
   Queries
      **web.whatsapp.com:** type AAAA, class IN

Thus, in the manner described herein, it is possible to handle information for LI in a network in an advantageous way that provides an LEA with relevant information about a target while reducing the size of the information actually provided to the LEA. The techniques are beneficial to LI approaches which seek to intercept target traffic related to the access and utilization of internet services.

Indeed, instead of sending (e.g. to an LEA) all packets and/or all packet headers of an intercepted payload, the MDF device 10 provides first information indicative of one or more DNS queries associated with the target. In this way, the MDF device 10 can still provide very useful information while delivering a relatively low amount of IRI to the LEMF device 20. The LEA can use the information to build a profile of the target (e.g. based on the internet service used by the target). Moreover, the technique described herein takes advantage of the (e.g. Internet's) DNS system which is invoked any time an end user (e.g. the target) types a domain name into their browser or uses a mobile app for certain services.

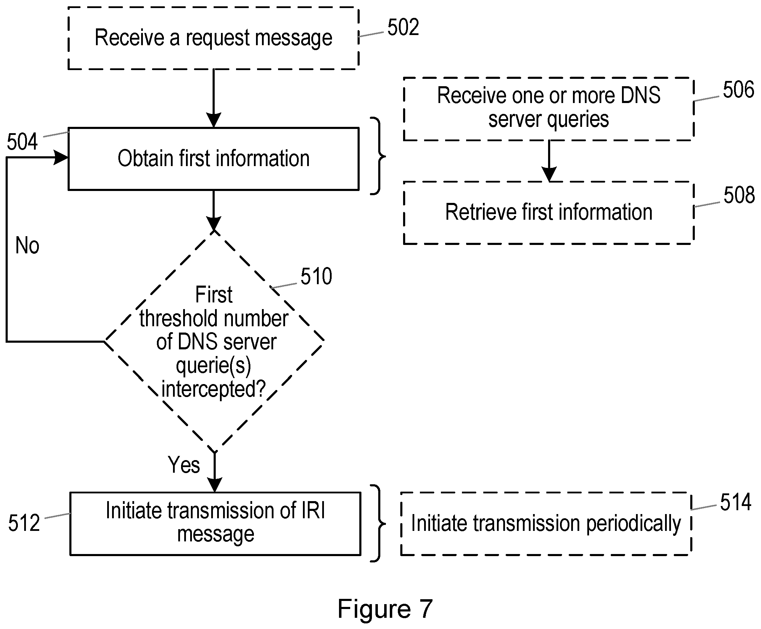

**Figure 7** is a flow chart illustrating process steps in a further example of a method performed by the MDF device 10. The steps of the method of Figure 7 illustrate example ways in which the steps of the method, as described with reference to Figure 4, may be implemented and supplemented in order to achieve the above discussed and additional functionality.

With reference to Figure 7, at block 502, the method may comprise receiving, from the LEMF device 20, a request message comprising a request to intercept network traffic associated with the target. The request may be a warrant, as defined herein, and/or an intercept request, as defined herein.

The method step illustrated by block 504 of Figure 7 can be as described with reference to block 302 of Figure 4.

As illustrated by block 506 of Figure 7, in some examples, obtaining the first information may comprise receiving the one or more DNS server queries (e.g. from the POI). More specifically, the MDF device 10 (e.g. the processing circuitry 12 of the MDF device 10) can receive the one or more DNS server queries. As illustrated by block 508 of Figure 7, in some examples, obtaining the first information may comprise retrieving the first information from the one or more DNS server queries. More specifically, the MDF device 10 (e.g. the processing circuitry 12 of the MDF device 10) can retrieve the first information from the one or more DNS server queries. Therefore, in some examples, the MDF device 10 is able to extrapolate one or more URLs visited by the target from the (e.g. corresponding) one or more DNS server queries.

As illustrated by block 510 of Figure 7, in some examples, initiating transmission of the IRI message may comprise initiating transmission of the IRI message if a first threshold number of the one or more DNS server queries is intercepted at the POI. For example, the transmission of the IRI message may be initiated in response to a first threshold number of the one or more DNS server queries being intercepted at the POI. As illustrated by block 510, if the first threshold number of the one or more DNS server queries is intercepted, the method can proceed to the method step as described with reference to block 512 of Figure 7. As also illustrated by block 510, if the first threshold number of the one or more DNS server queries is not (e.g. yet) intercepted, the method can proceed (e.g. return) to the method step as described with reference to block 504 of Figure 7. Thus, transmission of the IRI message can be performed iteratively if a first threshold number of the one or more DNS server queries is intercepted at the POI. For example, the transmission of the IRI message may be initiated for every first threshold number of the one or more DNS queries that are intercepted. Alternatively, or in addition, transmission of the IRI message may be initiated if first information indicative of the first threshold number of the one or more DNS server queries is obtained by the MDF device 10 (e.g. the first MDF entity referred to herein). Therefore, the transmission of the IRI message may be said to be "entry based".

The method step illustrated by block 512 of Figure 7 can be as described with reference to block 304 of Figure 4.

As illustrated by block 514 of Figure 7, in some examples, initiating transmission of the IRI message may comprise initiating transmission of the IRI message periodically. For example, the transmission of the IRI message may be initiated iteratively with respect to time. The transmission of the IRI message may be initiated iteratively every, for example, x seconds. Each iteration of the IRI message may comprise the first information obtained since the last transmission of the IRI message. Therefore, the transmission of the IRI message may be said to be "time based".

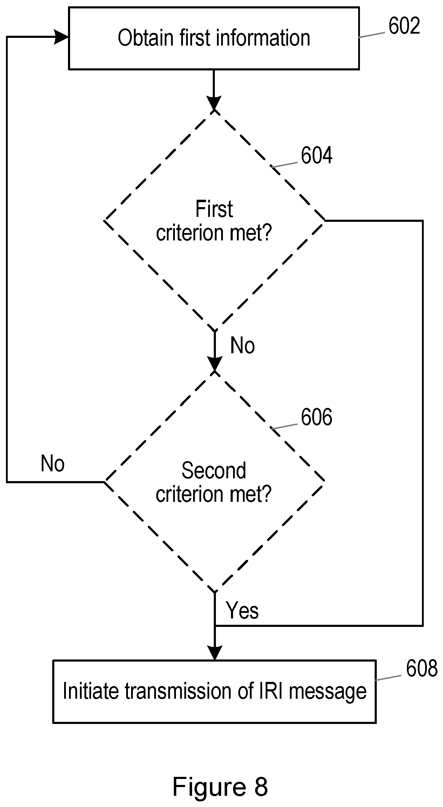

**Figure 8** is a flow chart illustrating process steps in a further example of a method performed by the MDF device 10. The steps of the method of Figure 8 illustrate example ways in which the steps of the method, as described with reference to Figure 4, and/or Figure 7, may be implemented and supplemented in order to achieve the above discussed and additional functionality.

The method step illustrated by block 602 of Figure 8 can be as described with reference to block 302 of Figure 4.

As illustrated by blocks 604 and 606 of Figure 4, in some examples, initiating transmission of the IRI message may comprise initiating transmission of the IRI message if one or more of a first criterion and a second criterion is met. For example, transmission of the IRI message may be initiated in response to the (e.g. first of) the first criterion and/or the second criterion being met. The first criterion may be met if a second threshold number of the one or more DNS server queries is intercepted at the interception point. The second threshold number of the one or more DNS server queries, and the first threshold number of the one or more DNS server queries, may be the same or different. The second criterion may be met if a first period of time elapses. Thus, in some examples, transmission of the IRI message may be performed (e.g. iteratively) upon aggregation of a second threshold number of the one or more DNS queries (e.g. at the MDF device 10) or upon expiration of the first period of time (e.g. the first condition to occur). Therefore, the transmission of the IRI message may be "time and entry based".

As illustrated by blocks 604 and 606 of Figure 7, if neither the first criterion nor the second criterion is met, the method can proceed (e.g. return) to the method step as described with reference to block 602 of Figure 8. As also illustrated by blocks 604 and 606 of Figure 8, if one or more of the first criterion and the second criterion is met, the method may proceed to the method step as described with reference to block 608 of Figure 8.

The method step illustrated by block 608 of Figure 8 can be as described with reference to block 304 of Figure 4.

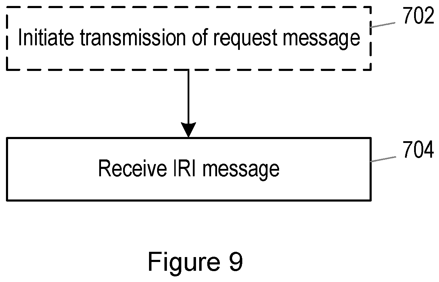

**Figure 9** is a flow chart illustrating process steps in a further example of a method performed by the LEMF device 20. The steps of the method of Figure 9 illustrate example ways in which the steps of the method, as described with reference to Figure 6, may be implemented and supplemented in order to achieve the above discussed and additional functionality.

With reference to Figure 9, at block 702, the method may comprise initiating transmission of a request message, as defined herein, towards the MDF device 10. More specifically, the LEMF device 20 (e.g. the processing circuitry 22 of the LEMF device 20) can initiate transmission of the request message (e.g. via the communications interface 26 of the LEMF device 20). The request message can comprise a request to intercept network traffic associated with the target, as defined herein. Therefore, in some examples, a new option can be provided to an LEA (e.g. the LEMF device 20) at warrant provisioning. The new option can allow for the delivery to the LEA (e.g. the LEMF device 20) of IRI messages (e.g. over HI2) comprising first information as defined herein (e.g. a list of URLs visited by the target). The new option may not be an exclusive option. For example, the new option may be set as a stand-alone alternative or in conjunction with one or more other options (e.g. content of communication (CC) delivery, packet data header information report (PDHIR) delivery, etc.)

The method step illustrated by block 704 of Figure 9 can be as described with reference to block 402 of Figure 6.

There is also provided a system (or network) comprising the MDF device 10 described herein and the LEMF device 20 described herein. A method performed by the system comprises the method described herein in respect of the MDF device 10 and the method described herein in respect of the LEMF device 20.

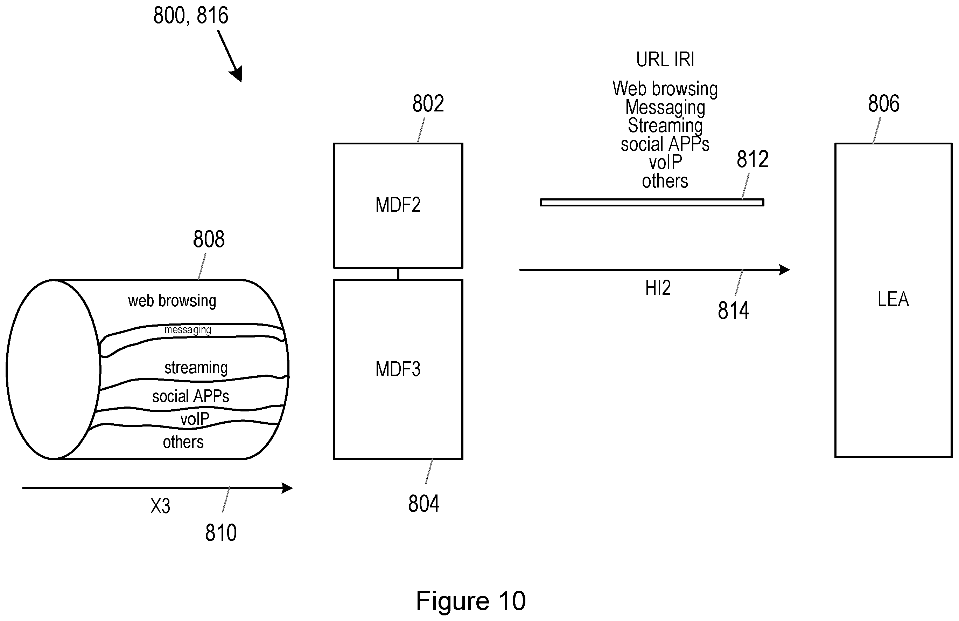

**Figure 10** is a schematic illustration of a system 800 according to an embodiment. The system 800 illustrated in Figure 10 may be in the form of a network 816, as defined herein. The system 800 illustrated in Figure 10 comprises an MDF device 10 as referred to herein. In the example illustrated in Figure 10, the MDF device 10 comprises a first MDF entity ("MDF3") 804 as referred to herein, and a second MDF entity ("MDF2") 802, as referred to herein. The system 800 illustrated in Figure 10 also comprises a LEA 806. In the example illustrated in Figure 10, the LEA 806 may be, and/or may comprise, the LEMF device 20 referred to herein.

As illustrated by arrow 810 of Figure 10, a payload is obtained (e.g. received) by the MDF device 10. More specifically, in the example illustrated in Figure 10, the first MDF entity (MDF3) obtains the payload. The payload can be obtained from a POI, as defined herein. Thus, it can be said that the payload is an intercepted payload. As also illustrated by arrow 810 of Figure 10, the payload may be obtained (e.g. received) via an X3 interface. As illustrated by block 808 of Figure 10, the payload can comprise information associated with the target such as web browsing information, messaging information, streaming information, social application (App) information, and/or voice over internet protocol (VoIP) information, etc. Therefore, the intercepted payload illustrated in Figure 10 can be as described with reference to Figures 1 and 2 above. The payload illustrated in Figure 10 can comprise the one or more DNS server queries as referred to herein.

The MDF device 10 (e.g. the first MDF entity 804) can retrieve the first information from the one or more server DNS queries as described herein. Although not explicitly illustrated in Figure 10, the first MDF entity 804 may provide (e.g. transmit) the first information to the second MDF entity 802. As such, the second MDF entity 802 can receive the first information from the first MDF entity 804. As mentioned herein, in some examples, such as that illustrated in Figure 10, the first information may comprise URL information only. For example, the first information may comprise only (e.g. a list of) one or more URLs visited by the target.

As illustrated by arrow 814 of Figure 10, the MDF device 10 (e.g. the second MDF entity 802) can initiate transmission of an IRI message ("URL IRI") comprising the first information towards the LEMF device 20 (e.g. the LEA 806). As such, the LEMF device 20 (e.g. the LEA 806) can receive the IRI message from the MDF device 10 (e.g. the second MDF entity 802). As also illustrated by arrow 814 of Figure 10, the handover interface, over which the IRI message is transmitted, may comprise an HI2 interface.

The amount of information (e.g. data) comprised in the first information, as comprised in the IRI message, is relatively small compared to the amount of information provided to an LEA according to existing techniques. For example, when block 812 of Figure 10 is compared to block 112 of Figure 1 and/or block 202 of Figure 2, it can be seen that the IRI message provided in the example illustrated in Figure 10 includes less information. Furthermore, the first information is indicative of the one or more DNS server queries and thus, as illustrated in Figure 10, the first information is still indicative of the targets activity, even if the amount of information comprised in the first information is relatively small.

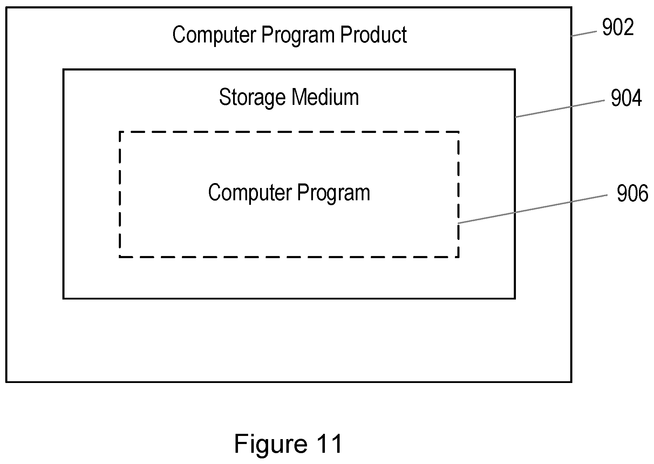

**Figure 11** illustrates a computer program product 902 according to an embodiment. More specifically, there is provided a computer program product 902 comprising a computer readable storage medium 904. The computer readable storage medium 904 comprises instructions (e.g. computer program 906) which are executable by processing circuitry (such as the processing circuitry 12 of the MDF device 10 described herein and/or the processing circuitry 22 of the LEMF device 20 described herein) to cause the MDF device 10 to perform the method described herein in respect of the MDF device 10, and/or to cause the LEMF device 20 to perform the method described herein in respect of the LEMF device 20. There is provided a computer program product 902 comprising a carrier 904 containing instructions for causing the MDF device 10 (e.g. the processing circuitry 12 of the MDF device 10 described herein) and/or the LEMF device 20 (e.g. the processing circuitry 22 of the LEMF device 20 described herein) to perform at least part of the method described herein. In some embodiments, the carrier 904 can be any one of an electronic signal, an optical signal, an electromagnetic signal, an electrical signal, a radio signal, a microwave signal, or a computer-readable storage medium.

There is also provided a computer program 906 comprising instructions which, when executed by processing circuitry (such as the processing circuitry 12 of the MDF device 10 described herein and/or the processing circuitry 22 of the LEMF device 20 described herein), cause the processing circuitry to perform at least part of the method described herein.

In some embodiments, the MDF device functionality and/or LEMF device functionality described herein can be performed by hardware. Thus, in some embodiments, the MDF device 10 and/or LEMF device 20 described herein can be a hardware entity. However, it will also be understood that optionally at least part or all of the MDF device functionality and/or LEMF device functionality described herein can be virtualized. For example, the functions performed by the MDF device 10 and/or LEMF device 20 described herein can be implemented in software running on generic hardware that is configured to orchestrate the MDF device functionality and/or LEMF device functionality described herein. In some embodiments, at least part or all of the MDF device functionality and/or LEMF device functionality described herein may be performed in a network enabled cloud. Thus, the method described herein can be realised as a cloud implementation according to some embodiments. The MDF device functionality and/or LEMF device functionality described herein may all be at the same location or at least some of the MDF device functionality and/or LEMF device may be distributed, e.g. the MDF device functionality and/or LEMF device functionality may be performed by one or more different entities.

It will be understood that at least some or all of the method steps described herein can be automated in some embodiments. That is, in some embodiments, at least some or all of the method steps described herein can be performed automatically. The method described herein can be a computer-implemented method.

Therefore, as described herein, there is provided an advantageous technique for handling information associated with LI in a network. In particular, the techniques described herein introduce a new option (e.g. at warrant provisioning) for providing an LEA with relevant information about a target by means of a relatively small delivery of information to a LEMF device 20. Indeed, by initiating transmission of an IRI message comprising first information indicative of one or more DNS server queries associated with the target (e.g. URL information), an MDF device 10 can provide the LEMF device 20 with relevant information about the target's (e.g. Internet) activity while reducing transmission size and thus more efficiently utilising network resources. Moreover, since DNS queries are commonly unencrypted, the information in such queries can be reliably intercepted in order to build an informative profile about the target's activity.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for handling information associated with lawful interception, LI, in a network (816), wherein the method is performed by a mediation and delivery function, MDF, device (10), of the network (816), the method comprising:
obtaining (302, 504, 602), from a point of interception, POI, first information indicative of one or more domain name system, DNS, server queries, wherein the one or more DNS server queries are associated with an LI target, wherein obtaining (302, 504, 602) the first information comprises:
receiving (506) the one or more DNS server queries; and
retrieving (508) the first information from the one or more server DNS queries; and
initiating transmission (304, 512, 608), over a handover interface, of an intercept related information, IRI, message towards a law enforcement monitoring facility, LEMF, device (20), of the network (816), wherein the IRI message comprises the first information.

2. The method as claimed in claim 1, wherein initiating transmission (304, 512, 608) of the IRI message comprises:
initiating transmission of the IRI message if (510) a first threshold number of the one or more DNS server queries is intercepted at the POI.

3. The method as claimed in claim 1 or 2, wherein initiating transmission (304, 512, 608) of the IRI message comprises:
initiating (514) transmission of the IRI message periodically.

4. The method as claimed in claim 1, wherein initiating transmission (304, 512, 608) of the IRI message comprises:
initiating transmission of the IRI message if (604, 606) one or more of a first criterion and a second criterion is met,
wherein the first criterion is met if (604) a second threshold number of the one or more DNS server queries is intercepted at the interception point, and
wherein the second criterion is met if (606) a first period of time elapses.

5. The method as claimed in any one of the preceding claims, wherein the IRI message comprises the first information only.

6. The method as claimed in any one of the preceding claims, wherein the first information comprises uniform resource locator, URL, information.

7. The method as claimed in any one of the preceding claims, wherein the IRI message is an IRI report message.

8. The method as claimed in any one of the preceding claims, wherein the handover interface comprises a handover interface port 2, HI2.

9. The method as claimed in any one of the preceding claims, wherein:
the MDF device (10) comprises a first MDF entity (504) and a second MDF entity (502);
the obtaining (302, 504, 602) of the first information is performed by the first MDF entity (504); and
the initiating of the transmission (304, 512, 608) of the IRI message is performed by the second MDF entity (502).

10. A method for handling information associated with lawful interception, LI, in a network (816), wherein the method is performed by a law enforcement monitoring facility, LEMF device (20), of the network (816), the method comprising:
receiving (402, 704), over a handover interface, an intercept related information, IRI, message from a mediation and delivery function, MDF, device (10), of the network (816), wherein the IRI message comprises first information indicative of one or more domain name system, DNS, server queries, and wherein the one or more DNS server queries are associated with an LI target, and wherein the first information was retrieved, by the MDF device (10) from the one or more DNS server queries.

11. A mediation and delivery function, MDF, device (10) comprising:
processing circuitry (12) configured to perform a method according to any one of claims 1 to 9.

12. A law enforcement monitoring facility, LEMF, device (20) comprising:
processing circuitry (22) configured to perform a method according to claim 10.

13. A system (800) comprising:
at least one MDF device (10) as claimed in 11; and
at least one LEMF device (20) as claimed in claim 12.

14. A computer program (906) comprising instructions which, when executed by processing circuitry, cause a mediation and delivery function device to perform a method according to any one of claims 1 to 9.

15. A computer program (906) comprising instructions which, when executed by processing circuitry, cause a law enforcement monitoring facility device to perform a method according to claim 10.

## Patentansprüche

1. Verfahren zur Handhabung von Informationen, die mit legalem Abhören, LI, in einem Netzwerk (816) assoziiert sind, wobei das Verfahren von einer Vorrichtung (10) mit Vermittlungs- und Zustellfunktion, MDF, des Netzwerks (816) durchgeführt wird, wobei das Verfahren Folgendes umfasst:
Erhalten (302, 504, 602) erster Informationen, die eine oder mehrere Domänennamensystem-Server-Abfragen, DNS-Server-Abfragen, angeben, von einem Abhörpunkt, POI, wobei die eine oder die mehreren DNS-Server-Abfragen mit einem LI-Ziel assoziiert sind, wobei das Erhalten (302, 504, 602) der ersten Informationen Folgendes umfasst:
Empfangen (506) der einen oder der mehreren DNS-Server-Abfragen; und
Abrufen (508) der ersten Informationen aus der einen oder den mehreren DNS-Server-Abfragen; und
Initiieren von Übertragung (304, 512, 608) einer Nachricht mit abhörbezogenen Informationen, IRI, über eine Handover-Schnittstelle an eine Vorrichtung (20) einer Strafverfolgungsüberwachungseinrichtung, LEMF, des Netzwerks (816), wobei die IRI-Nachricht die ersten Informationen umfasst.

2. Verfahren nach Anspruch 1, wobei das Initiieren der Übertragung (304, 512, 608) der IRI-Nachricht Folgendes umfasst:
Initiieren der Übertragung der IRI-Nachricht, falls (510) eine erste Schwellenanzahl der einen oder der mehreren DNS-Server-Abfragen an dem POI abgehört wird.

3. Verfahren nach Anspruch 1 oder 2, wobei das Initiieren der Übertragung (304, 512, 608) der IRI-Nachricht Folgendes umfasst:
periodisches Initiieren (514) der Übertragung der IRI-Nachricht.

4. Verfahren nach Anspruch 1, wobei das Initiieren der Übertragung (304, 512, 608) der IRI-Nachricht Folgendes umfasst:
Initiieren der Übertragung der IRI-Nachricht, falls (604, 606) eines oder mehrere von einem ersten Kriterium und einem zweiten Kriterium erfüllt werden,
wobei das erste Kriterium erfüllt wird, falls (604) eine zweite Schwellenanzahl der einen oder der mehreren DNS-Server-Abfragen an dem Abhörpunkt abgehört wird, und
wobei das zweite Kriterium erfüllt wird, falls (606) eine erste Zeitdauer verstreicht.

5. Verfahren nach einem der vorhergehenden Ansprüche, wobei die IRI-Nachricht nur die ersten Informationen umfasst.

6. Verfahren nach einem der vorhergehenden Ansprüche, wobei die ersten Informationen Uniform Resource Locator-Informationen, URL-Informationen, umfassen.

7. Verfahren nach einem der vorhergehenden Ansprüche, wobei die IRI-Nachricht eine IRI-Meldungsnachricht ist.

8. Verfahren nach einem der vorhergehenden Ansprüche, wobei die Handover-Schnittstelle einen Handover-Schnittstellenport 2, HI2, umfasst.

9. Verfahren nach einem der vorhergehenden Ansprüche, wobei:
die MDF-Vorrichtung (10) eine erste MDF-Entität (504) und eine zweite MDF-Entität (502) umfasst;
das Erhalten (302, 504, 602) der ersten Informationen von der ersten MDF-Entität (504) durchgeführt wird; und
das Initiieren der Übertragung (304, 512, 608) der IRI-Nachricht von der zweiten MDF-Entität (502) durchgeführt wird.

10. Verfahren zur Handhabung von Informationen, die mit legalem Abhören, LI, in einem Netzwerk (816) assoziiert sind, wobei das Verfahren von einer Vorrichtung (20) einer Strafverfolgungsüberwachungseinrichtung, LEMF, des Netzwerks (816) durchgeführt wird, wobei das Verfahren Folgendes umfasst:
Empfangen (402, 704) einer Nachricht mit abhörbezogenen Informationen, IRI, über eine Handover-Schnittstelle von einer Vorrichtung (10) mit Vermittlungs- und Zustellfunktion, MDF, des Netzwerks (816), wobei die IRI-Nachricht erste Informationen umfasst, die eine oder mehrere Domänennamensystem-Server-Abfragen, DNS-Server-Abfragen, angeben, und wobei die eine oder die mehreren DNS-Server-Abfragen mit einem LI-Ziel assoziiert sind und wobei die ersten Informationen von der MDF-Vorrichtung (10) aus der einen oder den mehreren DNS-Server-Abfragen abgerufen wurden.

11. Vorrichtung (10) mit Vermittlungs- und Zustellfunktion, MDF, umfassend:
Verarbeitungsschaltungsanordnung (12), die zum Durchführen eines Verfahrens nach einem der Ansprüche 1 bis 9 konfiguriert ist.

12. Vorrichtung (20) einer Strafverfolgungsüberwachungseinrichtung, LEMF, umfassend:
Verarbeitungsschaltungsanordnung (22), die zum Durchführen eines Verfahrens nach Anspruch 10 konfiguriert ist.

13. System (800), umfassend:
mindestens eine MDF-Vorrichtung (10) nach Anspruch 11; und
mindestens eine LEMF-Vorrichtung (20) nach Anspruch 12.

14. Computerprogramm (906), umfassend Anweisungen, die bei Ausführung durch eine Verarbeitungsschaltungsanordnung eine Vorrichtung mit Vermittlungs- und Zustellfunktion zum Durchführen eines Verfahrens nach einem der Ansprüche 1 bis 9 veranlassen.

15. Computerprogramm (906), umfassend Anweisungen, die bei Ausführung durch eine Verarbeitungsschaltungsanordnung eine Vorrichtung einer Strafverfolgungsüberwachungseinrichtung zum Durchführen eines Verfahrens nach Anspruch 10 veranlassen.

## Revendications

1. Procédé de gestion d'informations associées à une interception légale, LI, dans un réseau (816), dans lequel le procédé est réalisé par un dispositif de fonction de médiation et de distribution, MDF, (10) du réseau (816), le procédé comprenant :
l'obtention (302, 504, 602), à partir d'un point d'interception, POI, de premières informations indiquant une ou plusieurs interrogations de serveur de système de nom de domaine, DNS, dans lequel les une ou plusieurs interrogations de serveur DNS sont associées à une cible LI, dans lequel l'obtention (302, 504, 602) des premières informations comprend :
la réception (506) des une ou plusieurs interrogations de serveur DNS ; et
la récupération (508) des premières informations à partir des une ou plusieurs interrogations de serveur DNS ; et
l'initiation d'une transmission (304, 512, 608), sur une interface de transfert intercellulaire, d'un message d'informations liées à l'interception, IRI, vers un dispositif d'installation de surveillance des forces de l'ordre, LEMF, (20) du réseau (816), dans lequel le message IRI comprend les premières informations.

2. Procédé selon la revendication 1, dans lequel l'initiation d'une transmission (304, 512, 608) du message IRI comprend :
l'initiation d'une transmission du message IRI si (510) un premier nombre seuil des une ou plusieurs interrogations de serveur DNS sont interceptées au niveau du POI.

3. Procédé selon la revendication 1 ou 2, dans lequel l'initiation d'une transmission (304, 512, 608) du message IRI comprend :
l'initiation (514) d'une transmission périodique du message IRI.

4. Procédé selon la revendication 1, dans lequel l'initiation d'une transmission (304, 512, 608) du message IRI comprend :
l'initiation d'une transmission du message IRI si (604, 606) un ou plusieurs d'un premier critère et d'un deuxième critère sont remplis,
dans lequel le premier critère est rempli si (604) un deuxième nombre seuil des une ou plusieurs interrogations de serveur DNS sont interceptées au niveau du point d'interception, et
dans lequel le deuxième critère est rempli si (606) une première période de temps s'est écoulée.

5. Procédé selon l'une quelconque des revendications précédentes, dans lequel le message IRI comprend uniquement les premières informations.

6. Procédé selon l'une quelconque des revendications précédentes, dans lequel les premières informations comprennent des informations de localisateur de ressource uniforme, URL.

7. Procédé selon l'une quelconque des revendications précédentes, dans lequel le message IRI est un message de rapport IRI.

8. Procédé selon l'une quelconque des revendications précédentes, dans lequel l'interface de transfert intercellulaire comprend un port d'interface de transfert intercellulaire 2, HI2.

9. Procédé selon l'une quelconque des revendications précédentes, dans lequel :
le dispositif MDF (10) comprend une première entité MDF (504) et une deuxième entité MDF (502) ;
l'obtention (302, 504, 602) des premières informations est réalisée par la première entité MDF (504) ; et
l'initiation de la transmission (304, 512, 608) du message IRI est réalisée par la deuxième entité MDF (502).

10. Procédé de gestion d'informations associées à une interception légale, LI, dans un réseau (816), dans lequel le procédé est réalisé par un dispositif d'installation de surveillance des forces de l'ordre, LEMF, (20) du réseau (816), le procédé comprenant :
la réception (402, 704), sur une interface de transfert intercellulaire, d'un message d'informations liées à l'interception, IRI, depuis un dispositif de fonction de médiation et de distribution, MDF, (10) du réseau (816), dans lequel le message IRI comprend des premières informations indiquant une ou plusieurs interrogations de serveur de système de nom de domaine, DNS, et dans lequel les une ou plusieurs interrogations de serveur DNS sont associées à une cible LI, et dans lequel les premières informations ont été récupérées, par le dispositif MDF (10), à partir des une ou plusieurs interrogations de serveur DNS.

11. Dispositif de fonction de médiation et de distribution, MDF, (10) comprenant :
une circuiterie de traitement (12) configurée pour réaliser un procédé selon l'une quelconque des revendications 1 à 9.

12. Dispositif d'installation de surveillance des forces de l'ordre, LEMF, (20) comprenant :
une circuiterie de traitement (22) configurée pour réaliser un procédé selon la revendication 10.

13. Système (800) comprenant :
au moins un dispositif MDF (10) selon la revendication 11 ; et
au moins un dispositif LEMF (20) selon la revendication 12.

14. Programme informatique (906) comprenant des instructions qui, lorsqu'elles sont exécutées par une circuiterie de traitement, amènent un dispositif de fonction de médiation et de distribution à réaliser un procédé selon l'une quelconque des revendications 1 à 9.

15. Programme informatique (906) comprenant des instructions qui, lorsqu'elles sont exécutées par une circuiterie de traitement, amènent un dispositif d'installation de surveillance des forces de l'ordre à réaliser un procédé selon la revendication 10.
